# EUROPEAN PATENT APPLICATION

(11) **EP 3 822 392 A1**
(43) Date of publication of application: **19.05.2021**
(21) Application number: 19383005.6
(22) Date of filing: 15.11.2019
(51) Int. Cl.: C23F 3/02, C09G 1/02, C09K 3/14

(54) **METHOD FOR POLISHING PARTS MADE OF ALUMINUM ALLOYS COMPRISING SILICON**

(71) Applicant: Acondicionamiento Tarrasense, 08225 Terrassa Barcelona (ES)
(72) Inventor: MESEGUER GUALLAR, Antoni, 08225 Terrassa (Barcelona) (ES); SOLDI, Laura, 08225 Terrassa (Barcelona) (ES); CALVET MOLINAS, Martí, 08225 Terrassa (Barcelona) (ES); DOMENECH CASTELLS, Anna, 08225 Terrassa (Barcelona) (ES); DOMINGUEZ HERVELLA, Eva, 08225 Terrassa (Barcelona) (ES); AUBOUY, Laurent, 08225 Terrassa (Barcelona) (ES); DE LA FUENTE JORDA, Mercè, 08225 Terrassa (Barcelona) (ES)
(74) Representative: Herrero & Asociados, S.L.

(57) **Abstract**

The present invention relates to a method for polishing parts made of aluminum, and more specifically parts made of aluminum with a high content of silicon and produced by additive manufacturing.

## Description

The present invention relates to a method for polishing parts made of aluminum, and more specifically parts made of aluminum with a high content of silicon.

The method for polishing of the invention is especially useful in parts made of aluminum having a complex structure such as those produced by the additive manufacturing of metals.

The polishing described in the present invention is chemical polishing.

### Background of the Invention

The emergence of additive manufacturing has represented an enormous breakthrough in recent times as the various additive manufacturing technologies allow creating parts having complex shapes. These complex shapes mean that the step of polishing the part is complicated and hard; the surfaces to be polished are not readily accessible, and the part has a surface roughness that is characteristic of the method.

Surface roughness affects different properties of the part, such as fatigue strength, friction properties, and heat transfer.

The step of polishing in parts of this type is very specific due to the geometric complexity of these parts and the final requirements thereof.

The step of polishing is extremely important in the end part since, for example, the parts can be elements of a machine that are in contact with other parts and surface roughness influences their behavior. Improving the step of polishing means improving the finish and reducing surface roughness of the part, leading to a longer service life of the part and to said part carrying out its function better.

Moreover, the final finish of the part very significantly influences its final cost from the viewpoint of customer appreciation, which represents up to 40% of its market value.

Likewise, reducing roughness has become virtually indispensable in the case of internal fluid-conveying conduits, as in the case of heat exchangers, to prevent salt depositions and corrosion initiation points therein due to the roughness of the walls. In this sense it should be pointed out that one of the most important achievements of additive manufacturing, and more specifically additive manufacturing with metals, lies in the capacity to manufacture highly effective heat exchangers made of aluminum, for example, due to the possibility of manufacturing internal conduits that were impossible to produce up until now by means of the current manufacturing methods, such as machining and/or injection (die casting).

The polishing can be mechanical, wherein fine particles of abrasives are used to obtain a smoothing of the surface. Mechanical polishing can eventually form the so-called Beilby layer, which contains a mixture of oxides of the base metal and the compounds used for polishing; therefore, the physicochemical properties of the surface layer obtained by mechanical polishing can be different from the underlying alloy, causing mechanical stress which under certain conditions can give rise to processes of corrosion. Mechanical polishing is entirely inefficient for structures with complex designs characteristic of additive manufacturing, and likewise inefficient for cavities and conduits.

The patent with publication number US2013/0032573 describes a mechanical method for polishing a silicon wafer, adding a polishing liquid comprising a water-soluble polymer the same time polishing is carried out.

Another option is electropolishing, which is a surface treatment whereby the metal to be polished acts as an anode in an electrolytic cell and dissolves. By applying current, a polarized film is formed on the metal surface object of treatment, allowing the metal ions to spread over said film. The micro- and macro-projections, or high points of the rough surface, just as regions with burrs, are areas of higher current density than the rest of the surface, and dissolve at a faster rate, giving rise to smoother, more level, and/or burred surface.

In the case of electropolishing, voltage/amperage ratios must be defined for the different volumes and types of material of the parts to be electropolished. In the case of electropolishing, the difficulty lies in polishing conduits and the regions shielded by the geometry characteristic of each part. These complicated geometries are frequent due to the optimized designs characteristic of additive manufacturing.

An example of a patent document disclosing an implementation of electropolishing is patent EP3269848, which describes an electrolyte for the electropolishing of a metallic substrate, comprising at least one F compound and/or one CI compound, and at least one complexing agent, wherein the electrolyte does not contain an acid compound.

The chemical polishing described to date is very aggressive and uses strong acids to reduce the surface roughness of the object being polished. Polishing in acid medium is carried out at high temperatures and is ineffective for parts manufactured by SLM given the particular reactivity that parts of this type, as well as parts of the aluminum alloy type with a high silicon content exhibit. Carrying out acid polishing under the conditions described today in parts obtained by additive manufacturing is not suitable because to reduce roughness, too much material is removed from the part, and surface defects (pitting) are created.

It is therefore necessary to develop new methods that are effective for chemical polishing carried out at moderate concentrations and temperatures.

### Description of the Invention

The polishing described in the present invention improves the surface quality and dimensional precision of the polished parts. Parts which are polished with the method of the present invention are made of aluminum alloys comprising silicon. Due to the high silicon content, the known treatments for polishing aluminum are not effective.

The present method for polishing is especially useful in parts obtained by means of additive manufacturing, namely by means of SLM (selective laser melting), in that the characteristics of the surface of these parts are the high roughness and the high reactivity they exhibit in response to etching.

The method of the invention comprises a series of steps wherein the surface is activated and sensitized for the following steps of reducing surface roughness; chemical polishing is carried out wherein roughness is reduced in a controlled manner and selective etching of the roughness peaks is carried out; and finally, the smut that occurs is removed in order to continue polishing or to give it a final finish, given that the occurrence of the layer of smut means that the surface is passivated, preventing etching thereof. Activation of the surface is carried out by means of an alkaline solution; the following step of polishing is also performed by means of an alkaline solution, but with a higher concentration than the solution of the first step; finally, a step of removing depositions of metal oxides and depositions of other insoluble products generated in the alkaline steps, i.e., smut, is necessary.

The method of the invention is a method that can be readily implemented on an industrial level and is low-risk for operators.

Therefore, a first object of the invention is a method for polishing parts made of aluminum alloys comprising silicon, said method comprising the steps of:
a) introducing the part in an alkaline solution with a concentration comprised between 0.1% and 15%;
b) after step a), introducing the part in an alkaline solution with a concentration comprised between 1% and 70%;
d) removing the smut generated in steps a) and b).

In the present invention, the alkaline solution is an alkaline aqueous solution.

When the term smut is used herein, it refers to depositions of mixed metal oxides and depositions of other insoluble products generated in steps a) and b).

As mentioned, polishing is preferably advantageous in elements having a complex geometry, as well as in cavities and internal conduits.

### Description of a Preferred Embodiment

As discussed above, the first aspect of the invention relates to a method for polishing parts made of aluminum alloys with a silicon content, said method comprising the steps of:
a) introducing the part in an alkaline solution with a concentration comprised between 0.1% and 15%;
b) after step a), introducing the part in an alkaline solution with a concentration comprised between 1% and 70%;
d) removing the smut generated in steps a) and b).

The aluminum alloy preferably comprises silicon in a percentage by weight with respect to the total weight of 1% to 15%, more preferably 9% to 12%.

The alloy is preferably selected from: AISiMgTi, AlSi7Mg, AlSi10Mg, AISi, AISi5Cu, AlSi9Cu, AlSiCuNiMg, AlSiSc. In a particular manner it is AlSi10Mg.

The element to be polished has preferably been manufactured by additive manufacturing. In the present specification, the term "additive manufacturing" refers to the process of attaching materials together to create objects from a 3D model, where the attaching is usually layer after layer.

The element has preferably been manufactured by means of selective laser melting (SLM). Said method allows obtaining highly complex geometries. The method of the invention homogeneously polishes the complex geometries obtained by selective laser melting.

In step a), the alkaline solution is preferably selected from a solution of a hydroxide of alkali and/or alkaline earth metals or mixtures thereof, more preferably NaOH and/or KOH. The alkaline solution of step a) preferably has a concentration between 0.1% and 10%. Step a) is preferably carried out in a time comprised between 15 seconds and 5 minutes; more preferably between 15 seconds and 60 seconds.

Step a) is preferably carried out in the presence of a complexing compound. Step a) is preferably carried out in the presence of a thickening compound.

In step b), the alkaline solution is preferably selected from a solution of a salt of oxoanions derived from weak acids or mixtures thereof, the oxoanions are more preferably selected from ClO⁻, CO₃²⁻, HS⁻. The alkaline solution of step b) preferably has a concentration between 5% and 50%. Step b) is preferably carried out in a time comprised between 5 minutes and 15 minutes. Step b) is preferably carried out in the presence of a complexing compound. Step b) is preferably carried out in the presence of a thickening compound.

Step b) is preferably carried out in the presence of a surfactant. Example of surfactants are: ethoxyl propoxyl terpene, dialkylthiourea, ethylene glycol monobutyl ether, nonylphenol ethoxylate, C₁₂-C₁₈ fatty acids, C₁₂-C₁₈ ethoxylated fatty acids, (C₁₀-C₁₃)alkyl benzene sulfonic acid, lauryl ether sulfate, cocamidopropyl betaine, cocoamine, alkyl dimethyl amine oxide, cocoyl bis-(2-hydroxyethyl) amine oxide, lauramine oxide, N,N-dimethyltetradecyl amine oxide, quaternary ammonium compounds, benzyl-C₁₂₋₁₆-alkyldimethyl.

In a more preferred embodiment, the method comprises a step c) of introducing the part in a basic aqueous solution at a concentration comprised between 0.1% and 15%, preferably for a period comprised between 5 seconds and 30 minutes, or more preferably between 5 seconds and 300 seconds. The alkaline solution is more preferably selected from a solution of a hydroxide of alkali and/or alkaline earth metals or mixtures thereof, more preferably NaOH and/or KOH.

Step c) is preferably carried out in the presence of a complexing compound. Step c) is preferably carried out in the presence of a thickening compound.

The complexing agent is preferably selected from: citric acid, gluconic acid, sorbitol, iminodisuccinate acid, hydroxyethylethylendiaminetriacetic acid (trilon D), methylglycinediacetic acid (MGDA), diethylenetriamine penta(methylene phosphonic acid) (DTPMP), 2-phosphonobutane 1,2,4-tricarboxylic acid, iminosuccinic acid, polyaspartic acid, polyamino phosphonates, thiosulfuric acid, acrylic acid polymer, polyethylenimine, ethylenediaminetetraacetic acid, aminopolycarboxylic acid, diethylenetriaminepentaacetate, nitriloacetate, triphosphate acid, 1,4,7,10-tetraazacyclododecane-1,4,7,10-tetraacetic acid (DOTA), phosphonic acid, β-alaninediacetic acid, N-bis[2-(1,2-dicarboxy-ethoxy)ethyl]glycine (BCA5), N-bis[2-(1,2-dicarboxyethoxy)ethyl]-aspartic acid (BCA6), tetrakis(2-hydroxypropyl)ethylenediamine (THPED), N-(hydroxyethyl)-ethylenediaminetriacetic acid (HEDTA), and salts thereof. In a particular manner, the complexing compound is sorbitol.

The thickening compound is preferably selected from: polyamines, modified ureas, activated phyllosilicates, carboxymethylcellulose, and bentonite.

Step d) of removing smut is preferably carried out by means of introducing the part in an acidic solution in water at a concentration comprised between 0.1% and 10%. The acids are more preferably selected from hydrochloric acid, hydrofluoric acid, nitric acid, sulfuric acid, or mixtures thereof. This step is more preferably carried out in a time comprised between 30 seconds and 30 minutes.

Step d) is preferably carried out by means of introducing the part under stirring in an aqueous solution of abrasive components selected from glass, corundum, and/or zirconium oxide. The time of this step d) is preferably between 30 minutes and 8 hours. Prior to introducing the part in this aqueous solution of abrasive components, the part is preferably introduced in the acidic solution in water at a concentration comprised between 0.1% and 10% described in the preceding paragraph.

This step d) is more preferably performed in the presence of a surfactant compound and/or a corrosion inhibitor additive.

The corrosion inhibitor additive is preferably a compound which belongs to the dialkylthiourea group. It is more preferably selected from citric acid, ascorbic acid, 3-aminooctanol, 2-amino-2-methyl-1-propanol, monoethanolamine (MEA), diethanolamine (DEA), triethanolamine (TEA), monoisopropyl amine (MIPA), methoxypropylamine (MOPA), diglycolamine (DGA), N-alkylalkanolamine.

Method steps a) and b), or a), b), and c) of the aspect of the invention or of any of the embodiments thereof are preferably repeated in the same number and order n times, preferably from two to ten times.

Method steps a), b), and d), or a), b), c), and d) of the aspect of the invention or of any of the embodiments thereof are preferably repeated in the same or different number n times, preferably from two to ten times.

After each step a), b), c), and/or d), the part is preferably introduced in a distilled water bath.

### EXAMPLES

The following examples are merely illustrative of this invention and must not be interpreted in a sense that is limiting thereof.

### Example 1

A part made of AlSi10Mg obtained by means of SLM (selective laser melting) is used.

The part is submerged consecutively in a bath of a 1.5% NaOH alkaline solution for 30 seconds followed by a bath of a 25% potassium carbonate alkaline solution for 5 minutes.

Once these first two steps were performed, a new step of immersing the part in a 1.5% NaOH alkaline solution for 5 minutes and finally introducing it in an acidic solution of 10% HCl by weight for 3 minutes to remove the smut is carried out.

In this example of the invention, a part with Ra= 9.38 µm and Rz= 93.0 µm was used to reach, after the described polishing treatment, a reduction in Ra of 67% and a reduction in Rz of 73%, since a value of Ra= 3.24 µm and Rz= 24.7 µm was reached.

### Example 2

In the same manner as in Example 1, a part made of AlSi10Mg obtained by means of SLM (selective laser melting) is used.

The part is submerged in the following baths for a given time, in the order and in the number described in Table 1:
Bath 1: 0.5% NaOH alkaline solution;
Bath 2: 25% potassium carbonate alkaline solution;
Bath 3: acidic solution of 1% HCl w/w (0.37%)
Bath 4: aqueous solution, 200 ml. With 1% surfactants, 100 g of corundum with a particle size of 100 µm, 50 g of glass particles with a particle size of 200 µm.

**Table 1. Description of the times, order, and number of rounds in which the part passes through the different baths**

| Round number | Time in bath 1 | Time in bath 2 | Time in bath 3 | Time in bath 4 |
|---|---|---|---|---|
| Round 1 | 1 min | 15 min | - | - |
| Rounds 2 to 6 | 15 sec | 15 min | - | - |
| Round 7 | 15 sec | 15 min | 5 min | 1h 30 min |
| Round 8 | 15 sec | 15 min | - | - |
| Round 9 | 15 sec | 15 min | 5 min | 2h 30 min |

Six rounds of passing through bath 1, step a) of the invention, and through bath 2, step b) of the invention, were carried out. In the first round, the time of step a) is 1 minute, and the time of step b) is 15 minutes. In the following rounds two to six, the time of step a) is 15 seconds and the time of step b) is 15 minutes.

In round 7, the part passes through steps a), b), and d) of the invention. Step d) is carried out by introducing the part in an acidic bath and subsequently in a bath made up of a solution of abrasive particles. In round 8, the part only passes through steps a) and b), and finally in round 9, the part passes through steps a), b), and d). The nine rounds are consecutive.

In this example of the invention, a part with Ra= 8.97 µm and Rz= 82.53 µm was used to reach, after the described polishing treatment, a reduction in Ra of 35% and a reduction in Rz of 47%, since a value of Ra= 5.83 µm and Rz=43.5 µm was reached.

## Claims

1. Method for polishing parts made of aluminum alloys comprising silicon, said method comprising the steps of:
a) introducing the part in an alkaline solution with a concentration comprised between 0.1% and 15%;
b) after step a), introducing the part in an alkaline solution with a concentration comprised between 1% and 70%;
d) removing the smut generated in steps a) and b).

2. Method for polishing according to claim 1, **characterized in that** the alloy is AlSi10Mg.

3. Method for polishing according to any one of claims 1 to 2, **characterized in that** the part has been manufactured by means of selective laser melting.

4. Method for polishing according to any one of claims 1 to 3, **characterized in that** step a) is carried out in a time comprised between 15 seconds and 5 minutes.

5. Method for polishing according to any one of claims 1 to 4, **characterized in that** step b) is carried out in a time comprised between 5 minutes and 15 minutes.

6. Method for polishing according to any one of claims 1 to 5, **characterized in that** after step b), there is a step c) of introducing the part in a basic aqueous solution at a concentration comprised between 0.1% and 15%.

7. Method for polishing according to claim 6, **characterized in that** the part is in the basic aqueous solution for a period comprised between 30 seconds and 30 minutes.

8. Method for polishing according to any one of claims 1 to 7, **characterized in that** step a) and/or b) and/or c) are carried out in the presence of a complexing compound and/or a thickening compound.

9. Method for polishing according to any one of claims 1 to 8, **characterized in that** in step d) the part is introduced in an acidic solution in water at a concentration comprised between 0.1% and 10%.

10. Method for polishing according to claim 9, **characterized in that** step d) is carried out in a time comprised between 30 seconds and 5 minutes.

11. Method for polishing according to any one of claims 1 to 8, **characterized in that** step d) is carried out by means of introducing the part under stirring in an aqueous solution of abrasive components selected from glass, corundum, and/or zirconium oxide.

12. Method according to claim 11, **characterized in that** the time of step d) is between 30 minutes and 8 hours.

13. Method for polishing according to any one of claims 1 to 8, **characterized in that** in step d) the part is introduced in an acidic solution in water at a concentration comprised between 0.1% and 10% for a time comprised between 30 seconds and 5 minutes, and the part is subsequently introduced under stirring in an aqueous solution of abrasive components selected from glass, corundum, and/or zirconium oxide.

14. Method according to any of claims 1 to 13, **characterized in that** step a) and/or b) and/or c) and/or d) are carried out in the presence of surfactants.

15. Method for polishing according to any one of claims 1 to 14, **characterized in that** step d) is carried out in the presence of a corrosion inhibitor.

16. Method for polishing according to any one of claims 1 to 15, **characterized in that** the steps a) and b), or steps a), b), and c) are repeated in the same number and order n times.
